# EUROPEAN PATENT SPECIFICATION

(11) **EP 3 698 896 B1**
(45) Date of publication and mention of the grant of the patent: **29.12.2021**
(21) Application number: 20158457.0
(22) Date of filing: 20.02.2020
(51) Int. Cl.: B21D 43/24

(54) **DETACHING APPARATUS AND METHOD FOR THE AUTOMATIC DRAWING OF SHEETS FROM A STACK OF SHEETS**
ENTNAHMEVORRICHTUNG UND VERFAHREN ZUM AUTOMATISCHEN HERZIEHEN VON BÖGEN AUS EINEM BOGENSTAPEL
APPAREIL ET MÉTHODE DE DÉTACHEMENT POUR LE RETRAIT AUTOMATIQUE DE FEUILLES D'UNE PILE DE FEUILLES

(30) Priority: 22.02.2019 IT 201900002573
(43) Date of publication of application: 26.08.2020
(73) Proprietor: ASTES4 SA, 6828 Balerna (CH)
(72) Inventor: ZAFFARONI, Roberto, 6828 Balerna (IT)
(74) Representative: Faggioni, Carlo Maria

(56) References cited:
- DE-A1- 3 312 459
- DE-A1- 4 339 839
- KR-A- 20040 034 821

## Description

### FIELD OF THE INVENTION

The present invention relates to the field of the sheet handling in cutting plants. In particular, the invention refers to an improved detaching apparatus for the automatic drawing of metal sheets.

### STATE OF THE PRIOR ART

In the field of metal sheet processing, in particular in automatic cutting and sorting stations, a growing attention exists towards the optimisation of automation and of the process variables, to achieve ever increasingly controlled, orderly and efficient productivity.

In particular, the handling and sorting arrangements must guarantee a high degree of efficiency and of sturdiness, also for the purpose of limiting idle processing times, which are both undesired and harmful, since - despite having a cost equal to that of production times - they do not give added value, but rather cause a dramatic loss of flexibility and, hence, of potential throughput of the processing lines.

As known, in the cutting operations of plates/sheets the need exists of transferring and handling said sheets between one processing station and the other. In particular, the plates/sheets (be they metal ones or made of other materials) are arranged, at the start of a processing line, in stacks of multiple pieces lying on top of one another, as they come from warehouses.

The sheets must hence be drawn one at a time from the stack to be transferred to the processing stations, for example an operative table of a 2D cutting machine (which employs, for example, CO₂ lasers , fibre lasers, plasma or water jet cutting). For such purpose, loading/unloading systems are used which comprise handling arms (pneumatic, magnetic, equipped with gripping devices and so on ...) suitable to draw, transfer and release the sheets in the desired positions. Particularly effective and advantageous handling arms are the ones described, for example, in WO2008/139409 in the same Applicant's name.

As efficient the handling equipment may be, during the drawing step some problems often arise, especially when the sheets are large and heavy. As a matter of fact, the stacked sheets tend to adhere to one another due to the vacuum conditions which occur between the plate surfaces due to pressure in the surface contact areas. Moreover, such effect is enhanced by the casual presence of condensation water or of lubricating/preserving liquids.

Therefore, the drawing operations of a single, fresh sheet from the top of the stack can occur irregularly, for example resulting in the lifting of two or more sheets at one time (which then detach irregularly, taking up positions which then prevent regular automatic operation) or even resulting in the impossibility of lifting anything when the force applied by the handling arms is not sufficient to overcome the adhesion forces between the top sheet in the stack and the ones lying underneath.

It is clearly understood that the simultaneous removal of multiple sheets, the misalignments of the underlying sheets, manual corrections in fully automatic processes, drops of sheets and resulting damages, lead to unacceptable processing delays or, in the worst cases, undesired impacts against objects or people.

A traditionally employed system for separating sheets in a stack provides the use of an airflow directed at the separation region between two sheets. An example of this technology is disclosed in DE102008044111, which relates to a detachment nozzle for a stack of paper sheets in a printing machine of security sheets.

This technology per se, as can be guessed, works well with lightweight sheets such as paper security sheets, but it is not effective with heavyweight metal sheets. Nevertheless, air-jet detaching equipment has been proposed also for metal sheets, as described in DE4339839 DE3136544 or DE3312459 which discloses the features of the preamble of claim 1. Despite their simplicity, these solutions have however found little application at an industrial level, because they were not really effective.

EP0453835 describes a further compressed-air detaching apparatus which, however, has a remarkable complexity, with a plurality of oriented nozzles, to be able to achieve the desired effectiveness.

Therefore, these prior art solutions, despite representing a first solution attempt to the drawbacks mentioned above, do not prove fully satisfactory, because they do not allow to obtain a reliable detachment of the metal sheets each other or they have an excessively complex configuration which is inapplicable to metal sheets of varying size.

It should be noted furthermore that the use of compressed air line coming from a classic air delivering facility - as they are typically available in industrial environments - represents an obstacle for the movements of the machine and requires bulky safety shielding if it is meant to operate at high pressure.

The need is therefore felt to supply an improved air-operated detaching apparatus, which is capable of increasing the effectiveness of the detaching action between sheets, which does not necessarily require long distribution lines of high-pressure air and which has limited bulk and costs.

### SUMMARY OF THE INVENTION

The objects reported above, according to the present invention, are achieved through an improved blow detaching apparatus, for the detachment of sheets in a stack, having the features defined in claim 1. Other preferred features of the detaching apparatus are defined in the dependent claims.

### BRIEF DESCRIPTION OF THE DRAWINGS

Further features and advantages of the invention will in any case be more evident from the following detailed description of a preferred embodiment of the same, provided purely as a non-limiting example and illustrated in the attached drawings, wherein:
figs. 1 and 2 are views in two opposite perspectives of an improved blow detaching apparatus according to a preferred embodiment of the invention;
fig. 3 is a partially enlarged perspective view of the upper part of the nozzle unit of the detaching apparatus of fig. 1;
fig. 4A is a perspective view similar to that of fig. 1, of the nozzle unit according to an alternative embodiment;
fig. 4B is an enlarged perspective view of the upper part of the unit of fig. 4A;
fig. 5 is a plan view of a blowing nozzle of the detaching apparatus of fig. 1; and
fig. 6 is a schematic elevation side view which represents the relative arrangement of the blowing nozzle with respect to an handling head in a sheet raising step.

### DETAILED DESCRIPTION OF THE PREFERRED EMBODIMENT

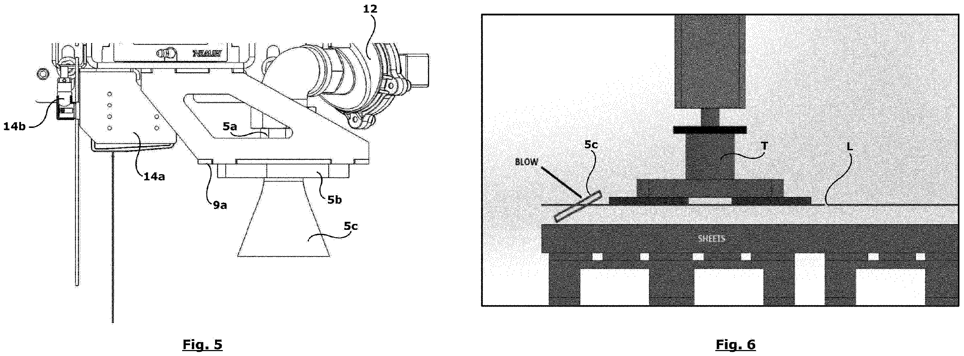

In a drawing area of stacked metal sheets, a sheet detachment apparatus is provided in cooperation with a sheet handling device (shown only partly in fig. 6).

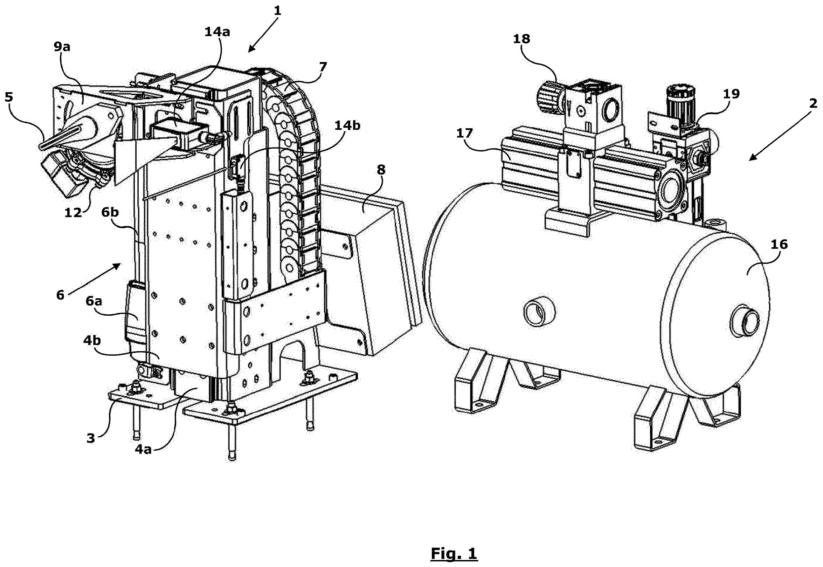

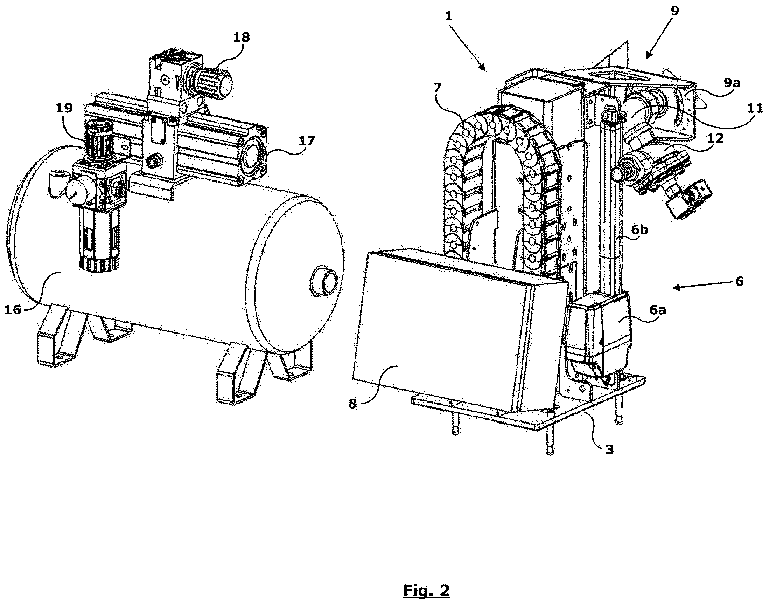

The detaching apparatus is in the shape of an air-operated detaching apparatus - clearly illustrated in figs. 1 and 2 - suitable to direct an air flow onto the lateral side of a stack of metal sheets, precisely at the gap between overlapping metal sheets.

According to the invention, the detaching apparatus comprises a nozzle assembly 1 and a storage assembly 2 of pressurised air.

Nozzle assembly 1 comprises a support basis 3 - fastened to the ground in the illustrated embodiment - installed next to the drawing area of the metal sheet stack, whereon a nozzle unit is installed. Said unit consists of a height-adjustable support 4, at the top of which a nozzle 5 is installed with the relative control accessories.

Support 4 preferably consists of a fixed post 4a, provided with sliding guides 4a', whereon a moving column 4b is mounted vertically slidable. The nozzle 5 is integral with the moving column 4b.

Moving column 4b is slidingly controlled in a vertical direction through a linear driver 6, preferably consisting of an electric motor 6a which causes the extension of a rod 6b constrained, with one end, to the moving column 4b.

On one side of support 4 - for example on the rear side in fig. 1 - a wire-guiding assembly 7 is provided, within which electric lead wires are arranged to provide electric supply to the top of the moving column 4b, in particular to supply electric current to the accessories of the nozzle unit.

Wire-guiding assembly 7 is connected, in the lower part, to a control panel 8.

Preferably nozzle 5 is mounted on an adjustment plate 9a of a support bracket 9 integral with the top of the moving column 4b. Adjustment plate 9a is arranged with a substantially vertical attitude and has in the middle a circular hole (not shown), through which a connection conduit 5a of nozzle 5 runs, as well as semicircular eyelets 9b are provided.

Nozzle 5, as clearly illustrated in fig. 5, comprises a connecting conduit 5a which extends, beyond a support flange 5b, into a divergent-convergent spout 5c (that is, with respect to a plane perpendicular to the flow of the nozzle, divergent in a first direction and convergent in the orthogonal direction) so as to change a circular cross-section of the connecting conduit 5a to an exit slit with a rectilinear-slit section. Divergent-convergent spout 5c can be obtained for example by squashing of a pipe with a circular section having a diameter equal to that of connecting conduit 5a.

The exit slit of divergent-convergent spout 5c terminates on a vertical plane, with a varying angle. Thereby, the dynamic pressure of the air flow coming out of spout 5c is directed mainly in a substantially horizontal direction, so as to meet the stack of metal sheets on the perimeter lateral edge thereof.

Nozzle 5 is mounted pivoting on the center line axis of the hole of plate 9a and is arranged in the desired angular position for example through a controllable electric motor (not shown) or simply through manual fastening means (not shown in detail) which engage with flange 5b and inside semicircular eyelets 9b, respectively.

An end of connecting conduit 5a is coupled with a connecting pipe 11, which in turn is connected to an outlet port of a ser-voassisted, fast-opening electrovalve 12. An inlet port of said fast-opening electrovalve 12 is instead connected to a second, large-diameter pipe (not shown), for example 2,54 cm (1 inch) diameter, which connects electrovalve 12 to a compressed-air tank of a storage assembly 2.

Fast-opening electrovalve 12 is driven by an operating logic of the apparatus, to cause quick opening of the electrovalve when necessary (further details will be provided in the following) and to let an air stream of compressed air flow out from storage assembly 2 to nozzle 5, so as to effectively transform the pressurised air volume in storage assembly 2, into a dynamic pressure at the exit of nozzle 5. Said dynamic pressure results in an impact wave (burst) capable of determining an effective mechanical detachment effect on the metal sheets.

Moreover, next to support bracket 9, a first 14a and a second 14b detection unit are also mounted on moving column 4b, the first one at about the same height where nozzle 5 is arranged and the second one slightly lower.

The first detection unit 14a is a device suitable to detect the thickness of the metal sheets which are arranged in front thereof, for example it is an optical device capable of emitting an electromagnetic beam and of detecting the reflection thereof caused by the presence of the metal sheets. The detection direction of said detection unit 14 is transversal to the height on the lateral side of the stack of metal sheets.

The second detection unit 14b is designed to detect the height of the stack of metal sheets during the vertical movement of the assembly.

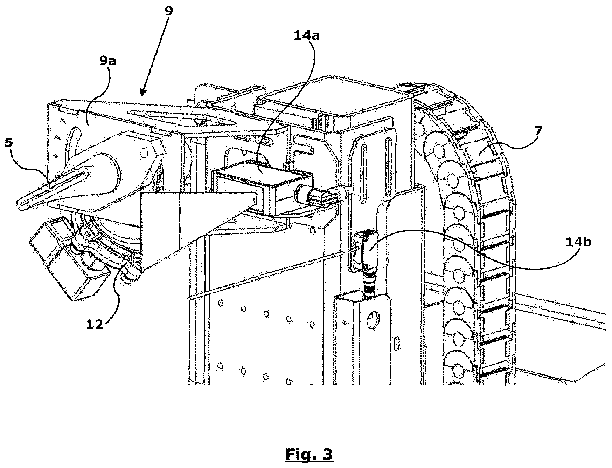

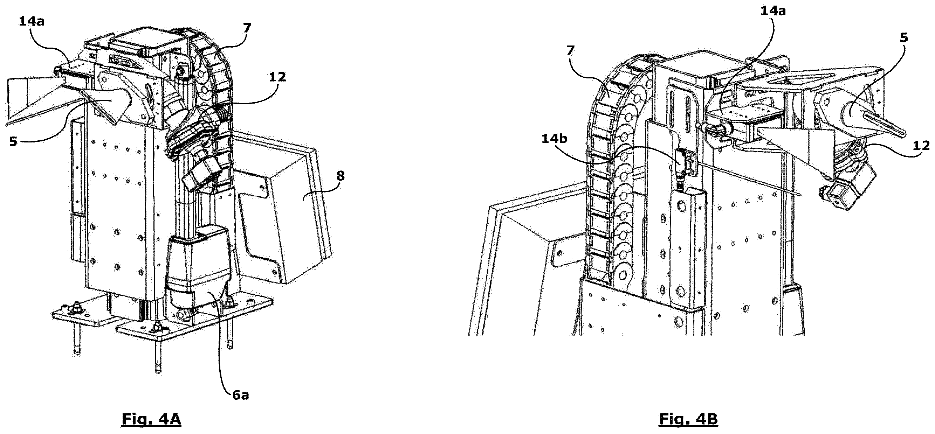

In the embodiment represented in figs. 1-3 the two detection units 14a and 14b are mounted on the right-hand side of nozzle 5 (in the front view), while in the embodiment of figs. 4A and 4B the two units 14a and 14b are mounted on the opposite side.

As can be clearly understood, control panel 8, through wiring introduced into wire-guiding assembly 7, allows to control linear actuator 6, fast-opening electrovalve 12, detection units 14a and 14b and any rotary actuator of nozzle 5, in order to perform a fully automated process. Moreover, control panel 8 includes a controlling device, for example with a programmable logic (PLC), meant to manage and control the various operating steps of the detaching apparatus in direct correlation with the operations carried out by an handling device or by other operating members during the drawing of the metal sheets.

Pressurised-air storage assembly 2 substantially comprises a tank 16, whereon a pressure multiplier 17 (booster), provided with a first pressure adjuster 18, and a second incoming pressure adjuster 19 at tank 16 are mounted.

As said, an outlet port of the storage assembly is connected to a pipe which connects to electrovalve 12. An inlet port to storage assembly 2, arranged upstream of the second pressure adjuster 19, is connected to a source of compressed air, typically available as distribution line of compressed air in industrial environments at about 6 bar.

In other words, the inlet port of the storage assembly 2 is connected to a standard air supply through at least a pressure adjuster and pressure multiplier.

The volume of tank 16 is set according to the specific requirements. For reasons of cost and bulk, tank 16 can have a size varying between 20 lt and 80 lt, preferably between 25 and 45 It. According to the requirements of the stack of metal sheets to be processed, the energy to be used can vary. For such purpose, tank 16 can be loaded with a reduced air pressure, using the second incoming pressure adjuster, for example at a pressure of 4-6 bar. Usually the tank can be loaded with a higher pressure, using pressure multiplier 17 and the first pressure adjuster 18, for example up to a pressure of 12 bar.

In general, hence, storage assembly 2 is capable of supplying compressed air with a flow rate and a pressure suited to guarantee, downstream of nozzle 5, an air burst sufficient to detach the metal sheets each other.

In the operation of the detaching apparatus, it is initially provided to arrange nozzle unit 1 next to the stack of metal sheets, preferably in the proximity of a corner along the longer side of the sheet (see fig. 6).

The tilting angle of the nozzle exit slit is set at the desired value, preferably at about 30° over horizontal. Thereby a wider vertical region of the sheet stack is covered and the impact wave of the air burst blow reaches a larger number of metal sheets.

The current thickness and height of the stack is detected through the first 14a and the second 14b detection unit 14 and support 4 is adjusted in height, so that the centreline of the exit slit of nozzle 5 is positioned at a preset height, corresponding to the separation plane (gap) between the metal sheet to be detached: thereby the maximum dynamic action of compressed air is in correspondence of the possible junction (gap) between a first and a second metal sheet of the stack (dynamic pressure is highest in the central area of the nozzle and decreases at the ends).

After that a preferred operating cycle is started which comprises also the coordination with an handling device.

With reference to fig. 6, gripping heads T of the handling device pick up a metal sheet L on top of the stack and raise it to a preset height, until positioning it at the centreline of nozzle 5.

In this position metal sheet L is stopped and electrovalve 12 is opened with a time varying between 0.1 and 0.2 seconds (time settable through PLC). The impact wave generated by the air burst against the edge of metal sheet L detaches the other metal sheets which may have possibly remained adherent to and hanging from the upper metal sheet, so as to cause them to drop by gravity from a controlled height and position with respect to the stack.

Subsequently a measurement of the thickness of raised metal sheet L through detection unit 14a is performed: if the thickness measure was not consistent with the one expected for the individual metal sheet, the control system repeats the cycle a number of times (threshold) defined acceptable. Beyond such threshold the automatic cycle is stopped requesting operator action.

The controller logic can possibly change the pressure and/or tilting angle and height parameters of nozzle 5 before proceeding to a new blowing operation.

Alternatively, the controller, after the lifting action of gripping head T has stopped, can control an inverse release procedure of the metal sheet on the stack and cause the lifting and blowing cycle to be repeated again.

Once measurement made by detection unit 14a is consistent with the thickness of a single metal sheet, the cycle controller obtains the consensus to continue in the transfer of metal sheet L to the next station, for example to the incoming table in a laser cutting machine.

Based on the operating conditions (size and thickness of the metal sheets, height of the stack, tank 16 can be loaded at each cycle with a higher pressure (through pressure multiplier 17) or a lower pressure (through pressure adjuster 19) with respect to the incoming standard pressure of the standard compressed-air distribution line.

Since at each drawing of metal sheets the height of the metal sheet stack decreases, through the height indications detected by detection unit 14b, the position of the nozzle unit 5 is continuously adapted through the intervention of driver 6.

As can be clearly understood from the above-reported description, the burst detaching apparatus according to the present invention allows to perfectly reach the set objects.

As illustrated, the apparatus according to the present invention proves an optimal solution to make the drawing of sheets from sheet stacks effective. As a matter of fact, the apparatus allows to achieve a remarkable flexibility of use, both in determining the position and the tilting angle of nozzle 5, but also in determining the correct supply air pressure value.

The provision of a air storage tank and of the fast-opening electrovalve ensures an impulse air burst, which produces a very effective impact wave for obtaining the detachment of adhering metal sheets.

Moreover, the short high-pressure pipe between storage assembly 2 and nozzle unit 1 is easily shieldable, while the remaining compressed-air supply line can also be extended, but does not imply particular safety problems because it has standard operating pressure in industrial environments.

However, it is understood that the invention must not be considered limited to the particular arrangements illustrated above, which represent only exemplifying embodiments thereof, but that different variants are possible, all within the reach of a person skilled in the field, without departing from the scope of protection of the invention, which is only defined by the following claims.

In particular, although the embodiments represented in the drawings provides a support base 3 fixed to the ground, it can be assumed that the nozzle assembly 1 and storage assembly 2 can be mounted onboard a moving structure, for example integral with a handling frame of the handling device. In such case, the height adjustment of support 4 can be provided as an option and it is not strictly necessary if it is provided to act only on the sheets raised off the stack through the same handling device.

Further, the above description makes reference to handling of metal sheets, but it is understood that the apparatus may be applicable also to handling of sheets of another nature and material.

## Claims

1. Detaching apparatus (A) of a stack of sheets, comprising at least a gripping head (T) of a sheet handling device (L) and a nozzle assembly (1) apt to eject a substantially horizonal air flow toward a lateral edge of a stack of sheets,
a pressurised-air storage assembly (2) provided at least with a tank of compressed air (16),
an inlet port of said storage assembly (2) being connected to an air supply line,
a high-pressure pipe between said nozzle assembly (1) and said storage assembly (2) intercepted by an electrovalve (12), **characterized in that**
said tank of compressed air (16) is provided with at least a pressure multiplier (17) and a relative first pressure adjuster (18)
said air supply line is connected to said storage assembly (1) upstream of said pressure multiplier (17),
said electrovalve (12) is a quick-opening electrovalve (12), and
said nozzle assembly (1) is provided with a nozzle (5), supplied through said electrovalve (12), the nozzle (5) comprising a connecting conduit (5a) which extends, beyond a support flange (5b), into a divergent-convergent spout (5c), i.e. divergent in a first direction and convergent in the orthogonal direction with respect to a plane perpendicular to a flow of the nozzle, so as to change a circular cross-section of said connecting conduit (5a) to an exit slit with a rectilinear-slit section.

2. Apparatus as in 1, wherein said nozzle assembly (1) comprises a moving support (4) provided with a height-adjustable column (4b) driven by an actuator (6), on which column (4b) said nozzle (5) is mounted as well as a detection unit (14) of said sheets (L).

3. Apparatus as in 2, wherein also said fast-opening electrovalve (12) is mounted on said height-adjustable column (4b).

4. Apparatus as in 1, 2, or 3, wherein said storage assembly (2) of pressurised air furthermore comprises a second pressure adjuster (19) in correspondence of an inlet port of said tank (16).

5. Apparatus as in any one of the preceding claims, wherein said nozzle (5) is adjustably mounted in rotation around an axis parallel to a direction of an air flow coming out of said spout (5c).

6. Apparatus as in 5, wherein said nozzle (5) is in the shape of a circular squashed pipe resulting in a rectilinear exit slit.

7. Apparatus as in 5 or 6, wherein said nozzle (5) has an exit slit of said spout (5c) tilted by about 30° with respect to the horizontal.

8. Detaching method of a stack of sheets comprising the steps of
- supplying an apparatus according to any one of the preceding claims equipped with at least a gripping head (T) of an handling device and with a nozzle assembly (1) provided with a nozzle (5), supplied with compressed air through a quick-opening electrovalve (12), and a detection unit (14a, 14b) of said sheets (L) of a stack of sheets,
- lifting a top sheet (L) of said stack of sheets through said gripping head (T) up until a preset height above the stack of sheets,
- arranging said nozzle (5) at said preset height causing a burst of compressed air against a lateral edge of said top sheet (L) through said nozzle (5),
- detecting the thickness of said top sheet (L) through said detection unit (14a) and determining if said thickness is consistent with an expected thickness for said top sheet (L),
- if said detected thickness is not consistent, repeat again said step of causing a burst of compressed air.

9. Method as in 8, wherein it is further provided a preliminary step of detecting the height of said top sheet (L) on the stack of sheets by said detection unit (14b) and height adjustment step of said nozzle (5) depending on the height of said top sheet (L).

## Patentansprüche

1. Ablösevorrichtung (A) für einen Blattstapel, die mindestens einen Greifkopf (T) einer Blatthandhabungsvorrichtung (L) und eine Düsenbaugruppe (1) umfasst, die geeignet ist, einen im Wesentlichen horizontalen Luftstrom in Richtung einer Seitenkante eines Blattstapels auszustoßen, sowie
eine Druckluftspeichereinheit (2), die mindestens mit einem Druckluftbehälter (16) versehen ist,
wobei eine Einlassöffnung der Speichereinheit (2) mit einer Luftzufuhrleitung verbunden ist,
eine Hochdruckleitung zwischen der Düsenanordnung (1) und der Speichereinheit (2), die von einem Elektroventil (12) unterbrochen ist, **dadurch gekennzeichnet, dass**
der Druckluftbehälter (16) mit mindestens einem Druckvervielfacher (17) und einem ersten relativen Druckregler (18) versehen ist, wobei
die Luftzufuhrleitung mit der Speichereinheit (2) stromaufwärts des Druckvervielfachers (17) verbunden ist,
das Elektroventil (12) ein schnell öffnendes Elektroventil (12) ist, und
die Düsenanordnung (1) mit einer Düse (5) versehen ist, die über das Elektroventil (12) versorgt wird, wobei die Düse (5) eine Verbindungsleitung (5a) umfasst, die sich über einen Stützflansch (5b) hinaus in eine divergent-konvergente Tülle (5c) erstreckt, d.h. divergent in einer ersten Richtung und konvergent in der orthogonalen Richtung in Bezug auf eine Ebene senkrecht zu einer Strömung der Düse, um einen kreisförmigen Querschnitt der Verbindungsleitung (5a) in einen Auslaßschlitz mit einem geradlinigen Schlitzquerschnitt zu ändern.

2. Vorrichtung gemäß 1, wobei die Düsenanordnung (1) einen beweglichen Träger (4) mit einer höhenverstellbaren Säule (4b), die von einem Stellglied (6) angetrieben wird, umfasst, wobei die Düse (5), sowie eine Erfassungseinheit (14) für die Blätter (L) an der Säule (4b) angebracht sind.

3. Vorrichtung wie in 2, wobei auch das schnell öffnende Elektroventil (12) an der höhenverstellbaren Säule (4b) angebracht ist.

4. Vorrichtung wie in 1, 2 oder 3, wobei die Druckluftspeichereinheit (2) außerdem einen zweiten Druckregler (19) in Übereinstimmung mit einer Einlassöffnung des Behälters (16) umfasst.

5. Vorrichtung nach einem der vorhergehenden Ansprüche, wobei die Düse (5) um eine Achse parallel zu einer Richtung eines aus der Tülle (5c) austretenden Luftstroms drehbar gelagert ist.

6. Vorrichtung nach Anspruch 5, wobei die Düse (5) die Form eines kreisförmigen gequetschten Rohrs hat, das einen geradlinigen Austrittsschlitz ergibt.

7. Vorrichtung gemäß 5 oder 6, bei der die Düse (5) einen um etwa 30° gegenüber der Horizontalen geneigten Austrittsschlitz der Tülle (5c) aufweist.

8. Verfahren zum Ablösen eines Blattstapels, das die folgenden Schritte umfasst:
- Bereitstellen einer Vorrichtung nach einem der vorhergehenden Ansprüche, die mit mindestens einem Greifkopf (T) einer Handhabungsvorrichtung und mit einer Düsenbaugruppe (1) ausgestattet ist, die mit einer Düse (5) versehen ist, die über ein schnell öffnendes Elektroventil (12) mit Druckluft versorgt wird, und einer Erfassungseinheit (14a, 14b) der Blätter (L) eines Blattstapels,
- Anheben eines obersten Blattes (L) des Blattstapels durch den Greifkopf (T) bis zu einer voreingestellten Höhe über dem Blattstapel,
- Anordnen der Düse (5) in der vorgegebenen Höhe, wodurch ein Druckluftstoß gegen eine Seitenkante des obersten Blattes (L) durch die Düse (5) verursacht wird,
- Erfassen der Dicke des obersten Blattes (L) durch die Erfassungseinheit (14a) und Bestimmen, ob die Dicke mit einer erwarteten Dicke für das oberste Blatt (L) übereinstimmt,
- wenn die erfasste Dicke nicht übereinstimmt, Wiederholen des Schritts des Auslösens eines Druckluftstoßes.

9. Verfahren wie in 8, wobei ferner ein vorbereitender Schritt des Erfassens der Höhe des obersten Blattes (L) auf dem Blattstapel durch die Erfassungseinheit (14b) und ein Schritt der Höheneinstellung der Düse (5) in Abhängigkeit von der Höhe des obersten Blattes (L) vorgesehen ist.

## Revendications

1. Appareil de détachement (A) d'une pile de feuilles, comprenant au moins une tête de préhension (T) d'un dispositif de manipulation de feuilles (L) et un ensemble de buse (1) apte à éjecter un flux d'air sensiblement horizontal vers un bord latéral d'une pile de feuilles,
un ensemble de stockage d'air sous pression (2) prévu au moins avec un réservoir d'air comprimé (16),
un orifice d'entrée dudit ensemble de stockage (2) étant raccordé à une ligne d'alimentation en air,
un tuyau à haute pression entre ledit ensemble de buse (1) et ledit ensemble de stockage (2) intercepté par une électrovanne (12),
**caractérisé en ce que** :
ledit réservoir d'air comprimé (16) est prévu avec au moins un multiplicateur de pression (17) et un premier ajusteur de pression (18) relatif,
ladite ligne d'alimentation en air est raccordée audit ensemble de stockage (1) en amont dudit multiplicateur de pression (17),
ladite électrovanne (12) est une électrovanne à ouverture rapide (12), et
ledit ensemble de buse (1) est prévu avec une buse (5), fournie par le biais de ladite électrovanne (12), la buse (5) comprenant un conduit de raccordement (5a) qui s'étend, au-delà d'une bride de support (5b), dans un bec verseur divergent-convergent (5c), c'est-à-dire divergent dans une première direction et convergent dans la direction orthogonale par rapport à un plan perpendiculaire à un flux de la buse, afin de modifier une section transversale circulaire dudit conduit de raccordement (5a) en une fente de sortie avec une section de fente rectiligne.

2. Appareil selon la revendication 1, dans lequel ledit ensemble de buse (1) comprend un support mobile (4) prévu avec une colonne ajustable en hauteur (4b) entraînée par un actionneur (6), sur laquelle colonne (4b) ladite buse (5) est montée ainsi qu'une unité de détection (14) desdites feuilles (L).

3. Appareil selon la revendication 2, dans lequel également ladite électrovanne à ouverture rapide (12) est montée sur ladite colonne ajustable en hauteur (4b).

4. Appareil selon la revendication 1, 2 ou 3, dans lequel ledit ensemble de stockage (2) d'air sous pression comprend en outre un second dispositif d'ajustement de pression (19) en correspondance d'un orifice d'entrée dudit réservoir (16).

5. Appareil selon l'une quelconque des revendications précédentes, dans lequel ladite buse (5) est montée, de manière ajustable, en rotation autour d'un axe parallèle à une direction d'un flux d'air sortant dudit bec verseur (5c) .

6. Appareil selon la revendication 5, dans lequel ladite buse (5) se présente sous la forme d'un tuyau écrasé circulaire se traduisant par une fente de sortie rectiligne.

7. Appareil selon la revendication 5 ou 6, dans lequel ladite buse (5) a une fente de sortie dudit bec verseur (5c) inclinée d'environ 30° par rapport à l'horizontale.

8. Procédé de détachement d'une pile de feuilles comprenant les étapes consistant à :
- prévoir un appareil selon l'une quelconque des revendications précédentes, équipé avec au moins une tête de préhension (T) d'un dispositif de manipulation et avec un ensemble de buse (1) prévu avec une buse (5), alimenté avec de l'air comprimé par le biais d'une électrovanne à ouverture rapide (12), et une unité de détection (14a, 14b) desdites feuilles (L) d'une pile de feuilles,
- lever une feuille supérieure (L) de ladite pile de feuilles par le biais de ladite tête de préhension (T) jusqu'à une hauteur prédéterminée au-dessus de la pile de feuilles,
- agencer ladite buse (5) à ladite hauteur prédéterminée provoquant une explosion de l'air comprimé contre un bord latéral de ladite feuille supérieure (L) par le biais de ladite buse (5),
- détecter l'épaisseur de ladite feuille supérieure (L) par le biais de ladite unité de détection (14a) et déterminer si ladite épaisseur est compatible avec une épaisseur attendue pour ladite feuille supérieure (L),
- si ladite épaisseur détectée n'est pas compatible, répéter à nouveau ladite étape consistant à provoquer une explosion d'air comprimé.

9. Procédé selon la revendication 8, dans lequel il est en outre prévu une étape préliminaire consistant à détecter la hauteur de ladite feuille supérieure (L) sur la pile de feuilles par ladite unité de détection (14b) et l'étape d'ajustement en hauteur de ladite buse (5) en fonction de la hauteur de ladite feuille supérieure (L).
